# EUROPEAN PATENT APPLICATION

(11) **EP 3 273 420 A1**
(43) Date of publication of application: **24.01.2018**
(21) Application number: 15885592.4
(22) Date of filing: 07.12.2015
(51) Int. Cl.: G08G 1/005, G01C 21/26, G09B 29/00

(54) **INFORMATION PROCESSING DEVICE, CONTROL METHOD, AND PROGRAM**

(30) Priority: 19.03.2015 JP 2015055803
(71) Applicant: Sony Corporation, Tokyo 108-0075 (JP)
(72) Inventor: KAMINO, Eiji, Tokyo 108-0075 (JP); NAKAMURA, Kentaro, Tokyo 108-0075 (JP)
(74) Representative: MFG Patentanwälte Meyer-Wildhagen Meggle-Freund Gerhard PartG mbB
(86) International application number: PCT/JP2015/084331
(87) International publication number: WO 2016/147500

(57) **Abstract**

[Object] To provide an information processing apparatus, a control method, and a program, which are capable of automatically sharing position information in accordance with schedule information on an appointment.

[Solution] An information processing apparatus including: an acquisition unit configured to acquire schedule information on an appointment between a plurality of users; and a controller configured to perform control in a manner that pieces of current position information of the plurality of users are shared a predetermined time period before an appointment time included in the schedule information.

## Description

### Technical Field

The present invention relates to an information processing apparatus, a control method, and a program.

### Background Art

There has been proposed an application with which multiple users can easily make an appointment by sharing pieces of position information with each other.

For example, the following Patent Literature 1 discloses a vehicle reservation system that makes it easier for a person to be picked up to make an appointment by specifying a meeting place and notifying a vehicle driver of the meeting place.

### Citation List

### Patent Literature

Patent Literature 1: JP 2008-309636A

### Disclosure of Invention

### Technical Problem

However, it has been troublesome to perform the method of notifying a partner of position information of an appointment place, since it takes time and effort for a user to select a partner to be notified of the appointment and to perform operation to issue notification of position information.

Accordingly, the present disclosure proposes an information processing apparatus, a control method, and a program, which are capable of automatically sharing position information in accordance with schedule information on an appointment.

### Solution to Problem

According to the present disclosure, there is provided an information processing apparatus including: an acquisition unit configured to acquire schedule information on an appointment between a plurality of users; and a controller configured to perform control in a manner that pieces of current position information of the plurality of users are shared a predetermined time period before an appointment time included in the schedule information.

According to the present disclosure, there is provided a control method including: acquiring schedule information on an appointment between a plurality of users; and performing control, by a controller, in a manner that pieces of current position information of the plurality of users are shared a predetermined time period before an appointment time included in the schedule information.

According to the present disclosure, there is provided a program for causing a computer to function as an acquisition unit configured to acquire schedule information on an appointment between a plurality of users, and a controller configured to perform control in a manner that pieces of current position information of the plurality of users are shared a predetermined time period before an appointment time included in the schedule information.

### Advantageous Effects of Invention

As described above, according to the present disclosure, position information can be shared automatically in accordance with schedule information on an appointment.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overview of an information processing system according to an embodiment of the present disclosure.
[FIG. 2] FIG. 2 is a block diagram showing an example of a configuration of a server according to the present embodiment.
[FIG. 3] FIG. 3 is a block diagram showing an example of a configuration of a user terminal according to the present embodiment.
[FIG. 4] FIG. 4 is a flow chart showing position information-sharing start processing according to the present embodiment.
[FIG. 5] FIG. 5 is a diagram showing an example of a notification screen for confirming whether or not to share position information according to the present embodiment.
[FIG. 6] FIG. 6 is a diagram showing an example of a screen in which position information is shared according to the present embodiment.
[FIG. 7] FIG. 7 is a flow chart showing processing during sharing of position information according to the present embodiment.
[FIG. 8] FIG. 8 is a diagram showing an example of a travel-start notification screen according to the present embodiment.
[FIG. 9] FIG. 9 is a diagram showing an example of an estimated arrival time notification screen according to the present embodiment.
[FIG. 10] FIG. 10 is a flow chart showing position information-sharing end processing according to the present embodiment.
[FIG. 11] FIG. 11 is a diagram showing an example of an arrival notification screen according to the present embodiment.
[FIG. 12] FIG. 12 is a diagram showing an example of a screen for confirming whether or not to perform notification of arrival according to the present embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description will be given in the following order.
1. Overview of information processing system according to embodiment of present disclosure
2. Basic configuration
   2-1. Configuration of server
   2-2. Configuration of user terminal
3. Operation processing
   3-1. Sharing start processing
   3-2. Sharing processing
   3-3. Sharing end processing
4. Conclusion

### «1. Overview of information processing system according to embodiment of present disclosure»

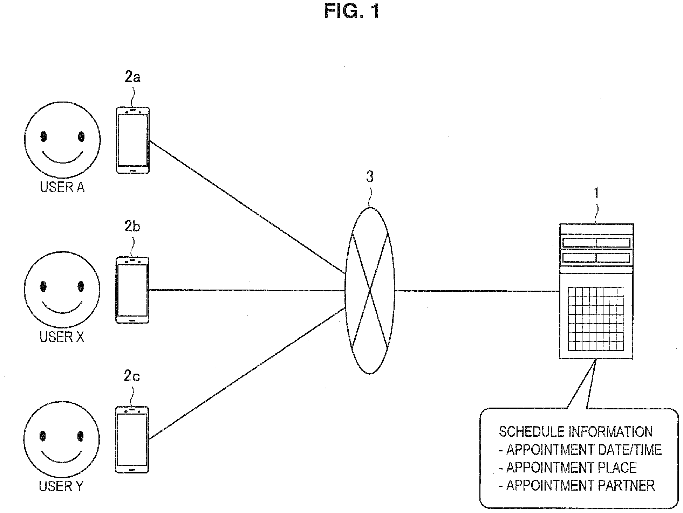

An overview of an information processing system according to an embodiment of the present disclosure will be described with reference to FIG. 1. As shown in FIG. 1, the information processing system according to the present embodiment includes a user terminal 2 that detects position information of a user, and a server 1 that performs sharing of pieces of position information of multiple users in accordance with schedule information. The server 1 and the user terminal 2 are connected to each other through a network 3, for example.

In the example shown in FIG. 1, a user terminal 2a held by a user A, a user terminal 2b held by a user X, and a user terminal 2c held by a user Y are connected to the server 1, for example. The server 1 acquires schedule information of the user A, for example, and, when grasping that the user A has an appointment with the user X and the user Y, automatically starts sharing of the pieces of position information of the user A, the user X, and the user Y a predetermined time period before an appointment time.

In this way, automatic sharing of the pieces of position information of the multiple users can be achieved for the appointment, without the troubles of selecting a partner to share the position information with and performing transmission operation of the position information.

To be specific, for example, when the server 1 grasps that the user A, the user X, and the user Y have an appointment with each other on the basis of information on an appointment date/time, an appointment place, and an appointment partner, which are included in the schedule information, the server 1 acquires the pieces of position information of those users a predetermined time period (for example, two hours) before an appointment time, and shares the pieces of position information of the multiple users at a higher rank. Next, the server 1 notifies at a predetermined timing each user of pieces of current position information of the respective appointment partner, and thus performs sharing of substantial pieces of position information of the multiple users. The timing of issuing notification to each user may be the predetermined time period before the appointment time or may be the timing corresponding to a travel distance or a travel time from a current point of each user to the appointment place.

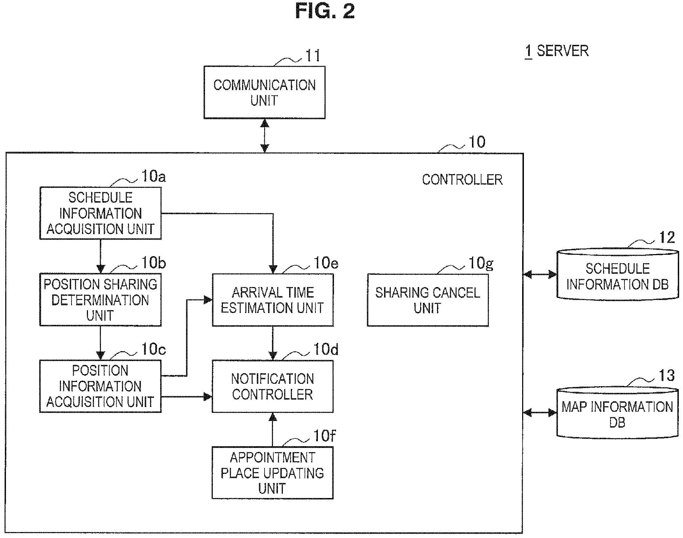

Heretofore, the overview of the information processing system according to an embodiment of the present disclosure has been described. Note that the user terminal 2 is not limited to a smartphone shown in FIG. 1. For example, the user terminal 2 may be a tablet terminal, a cellular phone terminal, a personal digital assistant (PDA), a personal computer (PC), a mobile music player, a mobile game console, or a wearable terminal. Subsequently, with reference to FIGS. 2 to 4, basic configurations of the server 1 and the user terminal 2 included in the information processing system according to an embodiment of the present disclosure will be described.

### «2. Basic configuration»

### <2-1. Configuration of server>

FIG. 2 is a block diagram showing an example of a configuration of the server 1 according to the present embodiment. As shown in FIG. 2, the server 1 includes a controller 10, a communication unit 11, a schedule information database (DB) 12, and a map information DB 13.

### (Controller 10)

The controller 10 is configured from, for example, a microcontroller including a central processing unit (CPU), a read only memory (ROM), a random access memory (RAM), a nonvolatile memory, and an interface, and controls each constituent of the server 1. To be specific, the controller 10 according to the present embodiment functions as, as shown in FIG. 2, a schedule information acquisition unit 10a, a position sharing determination unit 10b, a position information acquisition unit 10c, a notification controller 10d, an arrival time estimation unit 10e, an appointment place updating unit 10f, and a sharing cancel unit 10g.

The schedule information acquisition unit 10a acquires schedule information on an appointment of a user from the schedule information DB 12. Note that, although FIG. 2 shows a configuration of the case in which the schedule information is stored in an internal memory in the server 1, the present embodiment is not limited thereto. The schedule information of each user may be stored in an external memory such as the user terminal 2 or an external server on a network. In this case, the schedule information acquisition unit 10a may acquire the schedule information of the user from a predetermined external memory.

The position sharing determination unit 10b determines that pieces of current position information of multiple users who have an appointment with each other are to be shared among the multiple users. For example, the position sharing determination unit 10b determines that, on the basis of the schedule information acquired by the schedule information acquisition unit 10a, the pieces of current position information are to be shared among the multiple users who have an appointment with each other, a predetermined time period before an appointment time. Here, the predetermined time period represents a certain time period that is set in advance, such as two hours.

When the position sharing determination unit 10b determines the sharing of the pieces of position information, the position information acquisition unit 10c receives and acquires, through the communication unit 11 from the respective user terminals 2, the pieces of current position information of the multiple users who have an appointment with each other.

The notification controller 10d performs notification control on the user terminals 2 such that the pieces of current position information of the multiple users acquired by the position information acquisition unit 10c are shared among the multiple users. To be specific, for example, in the case where the user A, the user X, and the user Y have an appointment with each other, the notification controller 10d transmits the current position information of the user A to the user terminal 2b of the user X and to the user terminal 2c of the user Y, transmits the current position information of the user X to the user terminal 2a of the user A and to the user terminal 2c of the user Y, and transmits the current position information of the user Y to the user terminal 2a of the user A and to the user terminal 2b of the user X.

The timing at which the notification controller 10d performs notification of current position information of an appointment partner may be a predetermined time period before an appointment time or may be the timing corresponding to an appointment time, an appointment place, and a current position of a user. For example, the notification controller 10d starts notifying the multiple users of the current positions of the respective users, before a time period in which a user is capable of arriving at an appointment place at an appointment time taking into account a travel distance or a travel time from a current position to the appointment place of the user. The travel distance or the travel time to be taken into account may be an average travel distance or an average travel time, or the longest travel distance or the longest travel time from the respective current points of the multiple users to the appointment place.

Further, the notification controller 10d may notify a user of schedule information on an appointment a predetermined time period before an appointment time. Moreover, the notification controller 10d may perform notification of navigation information (including transportation means and a travel time) from a current point to an appointment place.

In addition, when a user has started traveling to an appointment place, the notification controller 10d may also notify another appointment user that the user has started traveling. The starting of traveling of the user may be determined, for example, in accordance with whether the user has started an action by riding a train, a bicycle, a vehicle, or the like.

The arrival time estimation unit 10e estimates a time at which a user arrives at an appointment place. To be specific, the arrival time estimation unit 10e estimates a time at which a user arrives at an appointment place on the basis of a current position of the user acquired by the position information acquisition unit 10c, appointment place information acquired by the schedule information acquisition unit 10a, and transportation means of the user. The transportation means (such as walking, bicycle, train, or automobile, and in the case of train, classification is also included such as "DD line") of the user may be determined in accordance with traveling speed and movement in a triaxial direction of the user in the user terminal 2 or the server 1. Further, the arrival time estimation unit 10e may estimate the arrival time for each transportation means. The notification controller 10d may notify the user himself/herself or an appointment partner of the estimated arrival time estimated by the arrival time estimation unit 10e and the transportation means determined by the arrival time estimation unit 10e.

In the case where a user who has arrived first issues an instruction to change an appointment place, the appointment place updating unit 10f performs updating of the appointment place. In response, the notification controller 10d notifies another appointment user (that is, user not yet arrived) of a new appointment place, and also calculates again an estimated arrival time of the user not yet arrived and issues notification.

The sharing cancel unit 10g cancels sharing of pieces of position information of multiple users in accordance with a predetermined condition. To be specific, for example, the sharing cancel unit 10g cancels sharing of position information in the case where a fixed time period has elapsed from an appointment time. Further, the sharing cancel unit 10g cancels sharing of position information in the case where everybody has gathered at an appointment place.

### (Communication unit 11)

The communication unit 11 has a function of being connected to an external device via wire or radio and performing data transmission/reception. For example, the communication unit 11 according to the present embodiment receives current position information of a user from the user terminal 2, and transmits current position information of another appointment user to the user terminal 2.

### (Schedule information DB 12)

The schedule information DB 12 is a storage that stores schedule information of a user. The schedule information includes information on an appointment, for example. The information on an appointment includes information on an appointment place, an appointment date/time, and a partner (another user) who has an appointment with the user. Further, the information on an appointment may include information on a purpose (event) of the appointment as a subject of the appointment. Further, the schedule information stored in the schedule information DB 12 may be schedule information for each user (individual schedule information), or may be schedule information shared between multiple users (shared schedule information).

### (Map information DB 13)

The map information DB 13 is a storage that stores map information. The map information may be used when the notification controller 10d shares position information of each user.

Heretofore, the specific configuration of the server 1 according to the present embodiment has been described. Note that the configuration of the server 1 shown in FIG. 2 is an example, and the present embodiment is not limited thereto. For example, the schedule information DB 12 and the map information DB 13 may also be stored in an external memory on a network. Further, a configuration of at least part of the server 1 shown in FIG. 2 may be provided to the user terminal 2.

### <2-2. Configuration of user terminal>

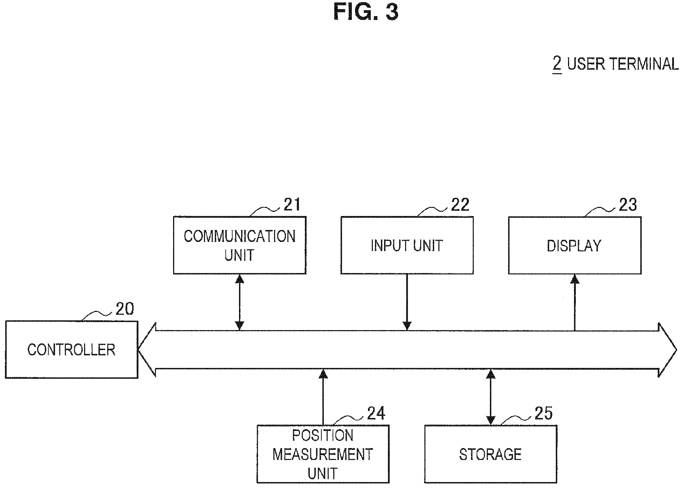

Next, with reference to FIG. 3, a configuration of the user terminal 2 will be described. FIG. 3 is a block diagram showing an example of a configuration of the user terminal 2 according to the present embodiment. As shown in FIG. 3, the user terminal 2 includes a controller 20, a communication unit 21, an input unit 22, a display 23, a position measurement unit 24, and a storage 25.

### (Controller 20)

The controller 20 is configured from, for example, a microcontroller including a CPU, a ROM, a RAM, a nonvolatile memory, and an interface, and controls each constituent of the user terminal 2. For example, the controller 20 executes various types of control in accordance with user operation input from the input unit 22. Further, the controller 20 performs control such that current position information measured by the position measurement unit 24 is transmitted to the server 1 through the communication unit 21.

Further, the controller 20 performs control such that pieces of position information of multiple users and information on an appointment received from the server 1 are displayed on the display 23.

### (Communication unit 21)

The communication unit 21 has a function of being connected to an external device via wire or radio and performing data transmission/reception. For example, the communication unit 21 according to the present embodiment transmits current position information to the server 1, and receives position information of another user and information on an appointment from the server 1.

### (Input unit 22)

The input unit 22 detects operation of a user, and outputs the operation as input information to the controller 20. For example, the input unit 22 may be a touch panel that detects touch operation of a user on a display screen, or may be a keyboard, a numeric keypad, a button, or a switch. Further, it is also possible to perform gesture input corresponding to a movement of a user's hand using a camera (not shown) provided to the user terminal 2. Moreover, it is also possible to perform voice input corresponding to a user's voice using a microphone (not shown) provided to the user terminal 2. Still further, the input unit 22 may also be achieved with multiple types of input devices.

### (Display 23)

The display 23 displays a text, an image, and other information. The display 23 performs display in accordance with control of the controller 20. Further, the display 23 is achieved by a liquid crystal display or the like. Moreover, the display 23 may be provided in an integrated manner with the input unit 22, and is achieved by, as shown in FIG. 1, for example, a touch panel display provided on one surface of the user terminal 2.

### (Position measurement unit 24)

The position measurement unit 24 has a function of detecting a current position of the user terminal 2 on the basis of an externally acquired signal. To be specific, for example, the position measurement unit 24 is achieved by a global positioning system (GPS) positioning unit, receives radio waves from GPS satellites, detects a position at which the user terminal 2 is present, and outputs the detected position information to the controller 20. Further, the position measurement unit 24 may detect a position through transmission/reception to/from Wi-Fi (registered trademark), Bluetooth (registered trademark), a cellular phone/PHS/smartphone, in addition to the GPS, or through near field communication.

### (Storage 25)

The storage 25 stores a program for executing various types of processing performed by the controller 20.

Heretofore, the configuration of the user terminal 2 according to the present embodiment has been described. Note that the configuration of the user terminal 2 shown in FIG. 3 is an example, and the present embodiment is not limited thereto. For example, the user terminal 2 may also be provided with a speaker, and may output notification of position information of another user or information on an appointment through audio.

### «3. Operation processing»

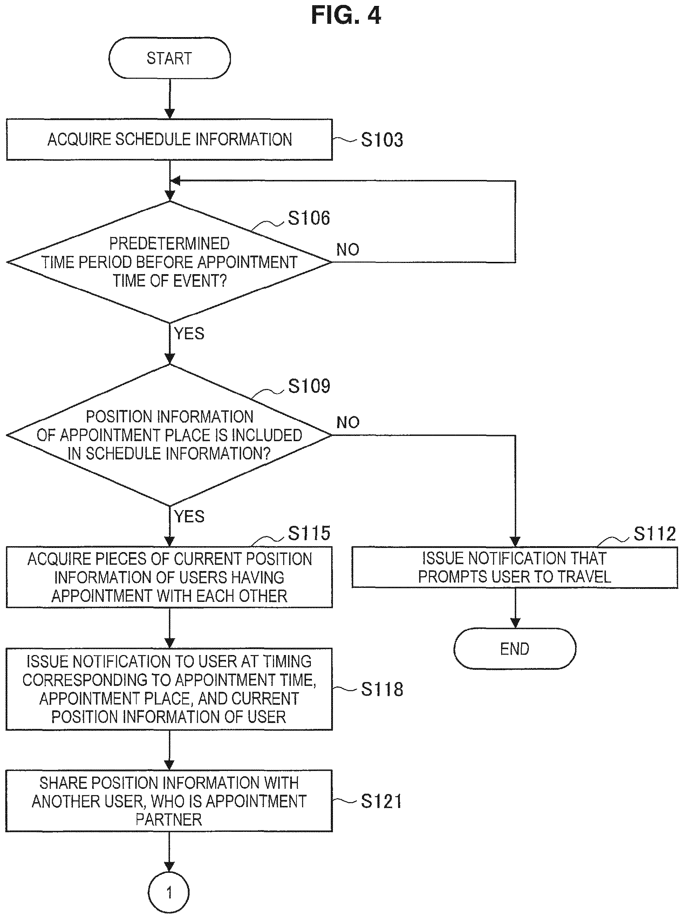

Subsequently, with reference to FIGS. 4 to 12, operation processing of the information processing system according to the present embodiment will be described specifically.

### <3-1. Sharing start processing>

FIG. 4 is a flow chart showing sharing start processing of position information according to the present embodiment. As shown in FIG. 4, first, in Step S103, the schedule information acquisition unit 10a of the server 1 acquires schedule information on an appointment.

Next, in the case where it is a predetermined time period (for example, a fixed time period such as two hours) before an appointment time included in the schedule information on the appointment (S106/Yes), and in the case where position information indicating an appointment place is included in the schedule information (S109/Yes), the position information acquisition unit 10c acquires pieces of current position information of multiple users who have an appointment with each other in Step S115.

On the other hand, in the case where the position information indicating an appointment place is not included in the schedule information (S109/No), the notification controller 10d issues notification that prompts a user to travel to the appointment place in Step S 112, and the processing ends.

Next, in Step S118, the notification controller 10d issues notification to a user at a timing corresponding to an appointment time, an appointment place, and current position information of the user. To be specific, the notification controller 10d issues notification of the schedule information on the appointment at a timing before a time period in which the user A can arrive at the appointment place taking into account a travel distance or a travel time from the current position of the user A to the appointment place. The information that the user is notified of includes: a map image indicating an appointment place and a current position of the user, which is generated using map information extracted from the map information DB 13, for example; information on the appointment, such as an appointment time, an appointment place, and a subject; and navigation information from the current point to the appointment place.

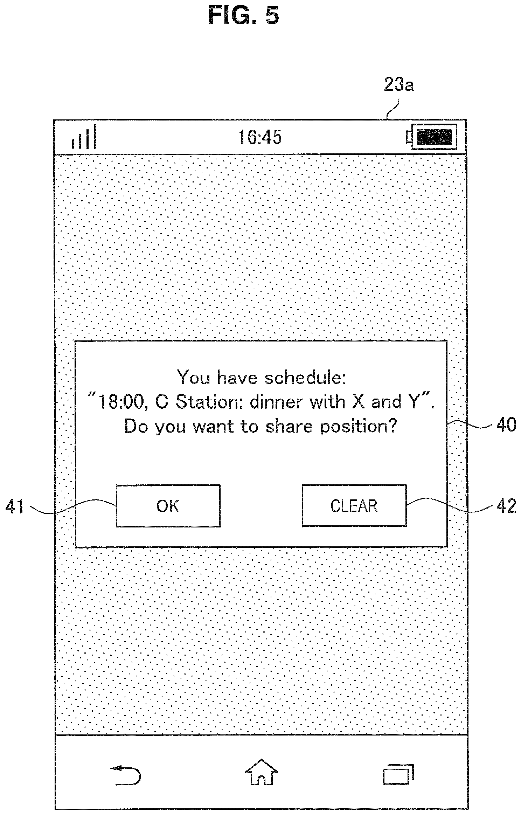

Further, the notification controller 10d may issue notification that confirms with a user whether to share the position information of the user with another user. Here, FIG. 5 shows an example of a notification screen for confirming whether or not to share the position information.

For example, in the case where the notification is issued to the user A, a notification image 40 is popped up in a display 23a of the user terminal 2a, as shown in FIG. 5. The notification image 40 includes: a text indicating whether to share the appointment time, the appointment place, the subject, and the position information, such as "You have schedule: '18:00, C station: dinner with X and Y'. Do you want to share position?"; an OK button 41; and a clear button 42. The user confirms the appointment subject, and selects the OK button 41 in the case where the user permits the position sharing, and selects the clear button 42 in the case where the user does not permit the position sharing. In the case where the clear button 42 is selected, the user terminal 2a notifies the server 1 that the position sharing is not permitted. On the other hand, in the case where the OK button 41 is selected, the user terminal 2a notifies the server 1 that the position sharing is permitted. The server 1 executes, in the case where the user permits the position sharing, the position information sharing processing shown in S121 to be described next.

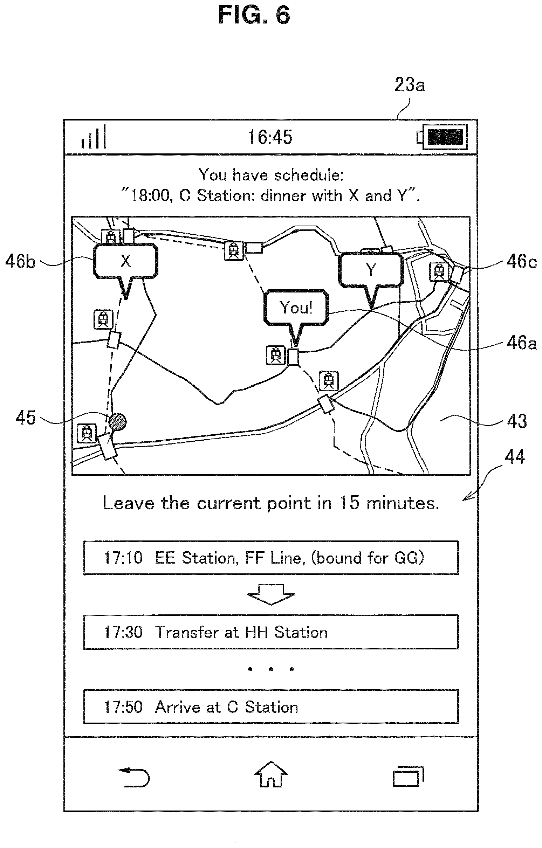

In Step S121, the notification controller 10d of the server 1 executes the processing of sharing the position information of the user with another user, who is an appointment partner. As described above, in the case where whether to share the position information has been confirmed to the user, the notification controller 10d performs control such that the position information is shared with the other user only in the case where the sharing has been permitted. The sharing of the position information is achieved by notifying multiple users who have an appointment with each other of the respective pieces of current position information. Here, FIG. 6 shows an example of a screen in which position information is shared.

As shown in FIG. 6, the display 23a displays: a map image 43 on which an icon 45 indicating the appointment place, an item 46a indicating the current position of the user A, and items 46b and 46c indicating the current positions of the other users (to be specific, the user X and the user Y) who have an appointment with the user A are displayed in a superimposed manner; and navigation information 44 from the current position of the user A to the appointment place. The map image 43 is initially displayed in a range including the current positions of the respective users and the appointment place, and can be enlarged or reduced, or can move the display range in accordance with user operation. The navigation information 44 may include information on transportation means such as train connection guidance, information on travel time (time required for reaching an appointment place), and the like.

In this way, since the appointment place and the current positions of the respective users who have an appointment with each other are displayed on the map image 43, the user A can intuitively grasp where the other users X and Y, who are the appointment partners, are currently at.

### <3-2. Sharing processing>

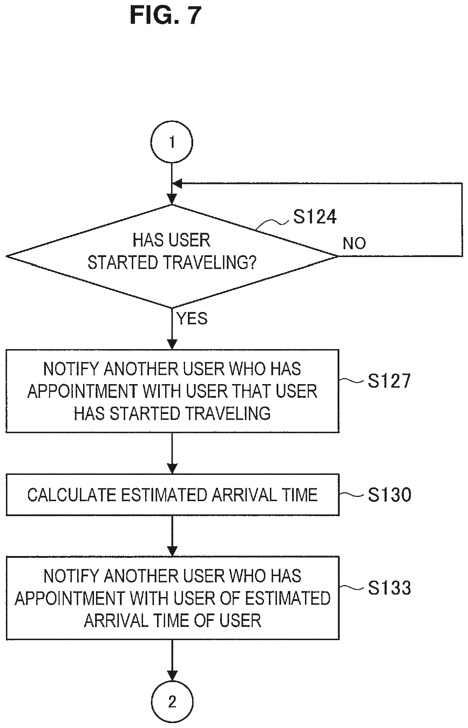

FIG. 7 is a flow chart showing processing during sharing of position information according to the present embodiment. The processing shown in FIG. 7 is performed subsequently to the position information sharing processing (S121) described with reference to FIG. 6.

In Step S124, the notification controller 10d determines whether the user has started traveling on the basis of position information of the user.

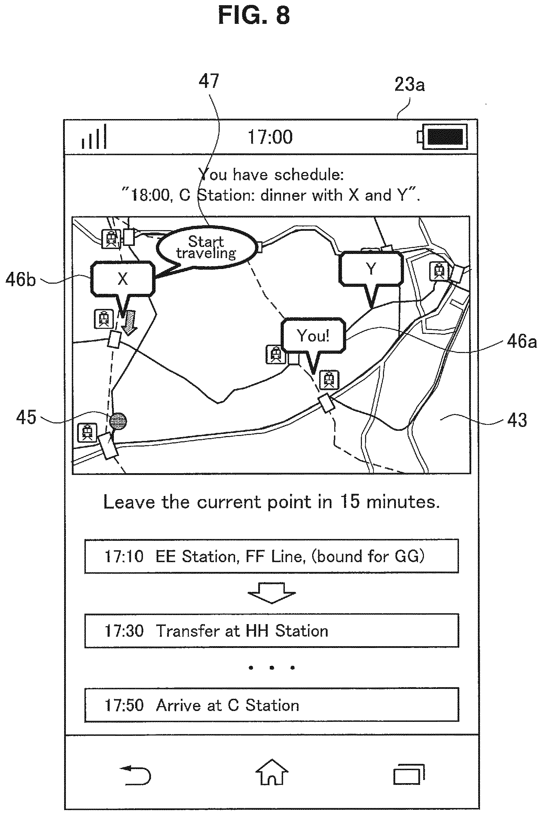

Next, in the case where the user has started traveling (S124/Yes), in Step S127, another user who has an appointment with the user is notified that the user has started traveling. The starting of traveling of the user may be the case where the user has started an action by riding a train, a bicycle, or the like, and such an action may be recognized by an action recognition algorithm using traveling speed and movement information in a triaxial direction of the user, for example. Here, an example of a travel-start notification screen is shown in FIG. 8.

As shown in FIG. 8, for example, on a map image 43 displayed on a display 23a, an item 46b indicating the current position of the user X and an item 47 indicating that the user X has started traveling in association with the item 46b are displayed. In this way, the user A can grasp that the user X, who is an appointment partner, has started traveling. Further, in addition, the transportation means of the user X (walking, bicycle, train, automobile, or the like) may be shown.

Further, since the pieces of position information of the respective users are updated continuously, the display position of an item 46a indicating the position of the user A on the map image 43 of FIG. 8 may also be changed on a real-time basis in accordance with the traveling of the user.

Next, in Step S130, the arrival time estimation unit 10e calculates an estimated arrival time of each appointment user. To be specific, the arrival time estimation unit 10e estimates the arrival time at the appointment place taking into account the current position of the user, the appointment place, and the transportation means.

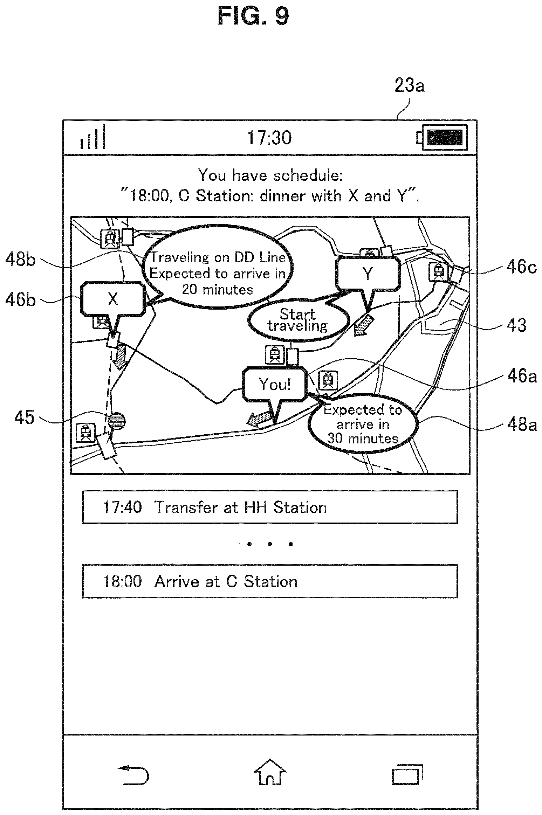

Next, in Step S133, the notification controller 10d notifies the other user(s), who has(/have) an appointment with the user, of the estimated arrival time of the user. That is, the notification controller 10d performs control such that the notification of the estimated arrival time of each user is issued to each other. Here, an example of an estimated arrival time notification screen is shown in FIG. 9.

As shown in FIG. 9, for example, on a map image 43 displayed on a display 23a, an item 46b indicating the current position of the user X and an item 48b indicating the estimated arrival time of the user X in association with the item 46b are displayed. Note that the item 48b may include information on the transportation means of the user X. Further, an item 48a indicating the estimated arrival time of the user A may also be displayed in association with the item 46a indicating the current position of the user A. In this way, the user A can grasp the estimated arrival time at the appointment place of the user X, who is an appointment partner.

### <3-3. Sharing end processing>

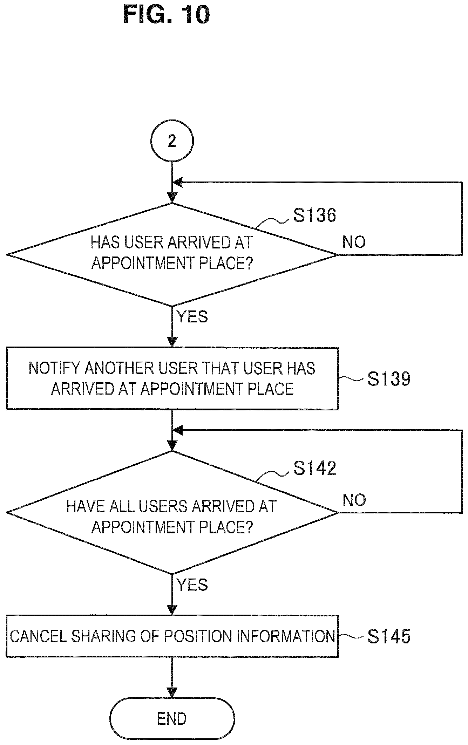

FIG. 10 is a flow chart showing position information-sharing end processing according to the present embodiment. The processing shown in FIG. 10 is performed subsequently to the estimated arrival time notification processing (S133) described with reference to FIG. 7.

In Step S136, the notification controller 10d determines whether the user has arrived at the appointment place on the basis of position information acquired by the position information acquisition unit 10c.

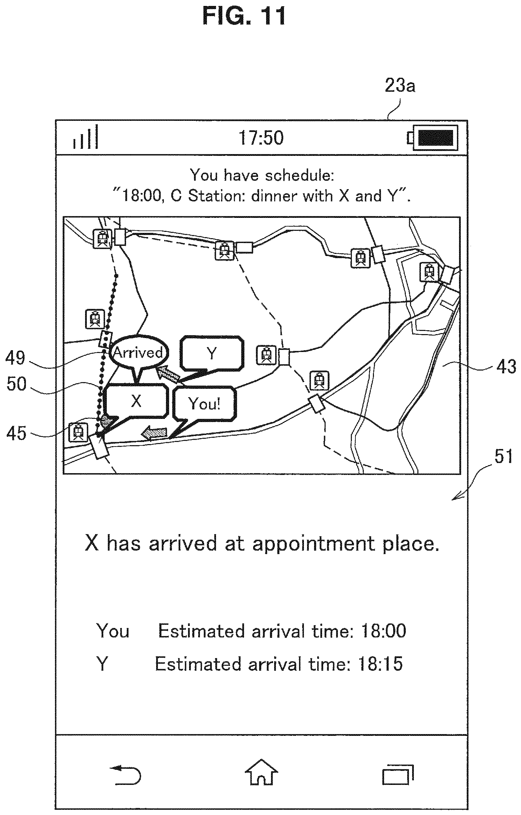

Next, in the case where it is determined that the user has arrived at the appointment place (S136/Yes), in Step S139, the notification controller 10d notifies another user that the user has arrived at the appointment place. Here, an example of an arrival notification screen is shown in FIG. 11.

As shown in FIG. 11, a display 23a displays: a map image 43 on which an icon 45 indicating an appointment place and an item 49 indicating that the user X has arrived at the appointment place are displayed in a superimposed manner; and text information 51 showing that the user X has arrived and estimated arrival times of the users not yet arrived. The estimated arrival times of the users not yet arrived may be displayed in order of arrival, for example. Further, a travel trajectory of the user X who has already arrived may also be displayed on the map image 43. Note that, although only the travel trajectory of the user X is displayed in the example shown in FIG. 11, travel trajectories of the user A and the user Y (that is, users not yet arrived) may also be displayed. In this way, the user A can recognize that the user X has arrived at the appointment place. Further, since the estimated arrival times of the users not yet arrived are presented, whether the users not yet arrived are in time or late for the appointment time can be grasped.

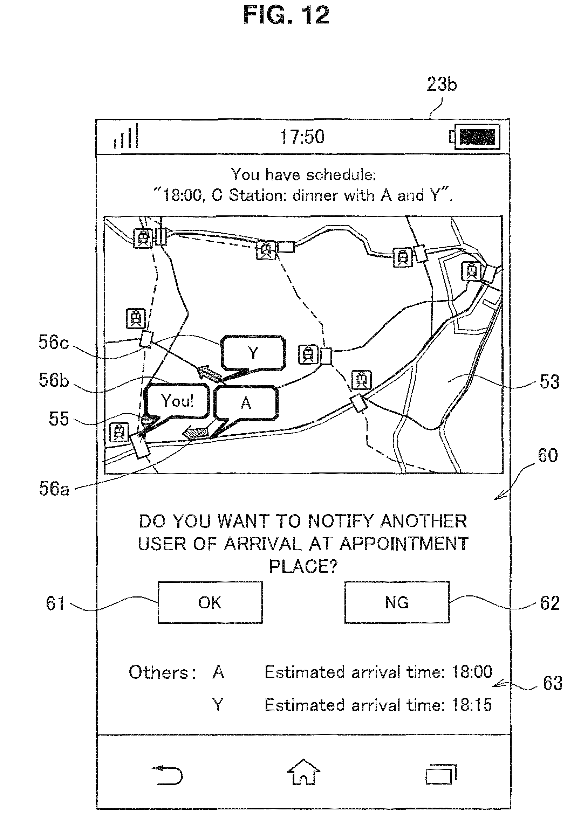

Further, in S139 described above, although the other user is notified automatically that the user X has arrived at the appointment place, the present embodiment is not limited thereto, and, for example, the user X who has already arrived may determine whether to notify the other user that the user X has arrived. Here, an example of a screen for confirming whether or not to perform notification of arrival is shown in FIG. 12.

FIG. 12 shows an example of a screen displayed on a display 23b of the user terminal 2b of the user X who has arrived at the appointment place. As shown in FIG. 12, the display 23b displays: a map image 53 on which an icon 55 indicating the appointment place and items 56a, 56b, and 56c indicating current positions of the respective users are displayed in a superimposed manner; text information 60 for confirming whether or not to perform notification of arrival to the other users; an OK button 61; an NG button 62; and text information 63 indicating estimated arrival times of the users not yet arrived. The user X selects the OK button 61 in the case where the user X permits to perform notification of arrival, and selects the NG button 62 in the case where the user X does not permit to perform notification of arrival. In the case where the OK button 61 is selected, the user terminal 2b transmits that the arrival notification is permitted to the server 1, and in the case where the NG button 62 is selected, the user terminal 2b transmits that the arrival notification is not permitted to the server 1. In the case where that the arrival notification is permitted is transmitted from the user terminal 2b, the server 1 notifies the other users (to be specific, the user A and the user Y) that the user X has arrived at the appointment place (see FIG. 11).

Then, in the case where all the users who have an appointment with each other have arrived at the appointment place (S142/Yes), the server 1 cancels the sharing of position information in Step S145. To be specific, for example, the server 1 performs control such that the items indicating the pieces of current position information of the respective users displayed on the user terminal 2 are deleted.

Heretofore, the operation processing of the information processing system according to the present embodiment has been described specifically. Note that, in the information processing system according to the present embodiment, a user who has arrived at the appointment place first may be given an authority to change the appointment place. For example, the notification controller 10d of the server 1 presents a screen confirming whether or not to change the appointment place to the user who has arrived at the appointment place first, and accepts the changing of the appointment place. In the case where the appointment place has been changed, the appointment place updating unit 10f of the server 1 replaces the appointment place included in schedule information with a new appointment place. Further, the notification controller 10d notifies the users not yet arrived with the updated new appointment place.

To be more specific, the current position of the user who has arrived first may be set to the new appointment place. For example, in the case where the user who has arrived first enters and waits in a coffee shop near the appointment place, the user can change the appointment place to the coffee shop as the new appointment place.

Further, in the case where the appointment place is different from a destination (place of an event), a place taken into account the destination may be set to a new appointment place. For example, in the case where a restaurant is the destination and the nearest station is set to the appointment place, the appointment place can be changed to a place nearer to the restaurant as the new appointment place.

Moreover, in the case where the appointment place is different from a destination (place of an event), taking into account the destination and an arrival place that corresponds to transportation means of a user not yet arrived, a place nearer to the destination may be set to the new appointment place. For example, in the case where an arrival place (an exit of a station or a bus stop) of the train or the bus that the user not yet arrived is on is in between the appointment place and the destination, the appointment place can be changed to the arrival place or a place between the arrival place and the destination as the new appointment place, thus, an appointment can be made at a place nearer to the destination.

### «4. Conclusion»

As described above, the information processing system according to an embodiment of the present disclosure can automatically share position information in accordance with schedule information on an appointment.

To be more specific, the server 1 according to the present embodiment acquires pieces of position information of multiple users who have an appointment with each other, a predetermined time period before an appointment time, and, at a timing corresponding to a travel distance or a travel time from a current point of a user, notify other user(s) who has(/have) an appointment with the user with the current point of the user. In this way, the user can recognize how far the other user(s) is(/are) away from the appointment place.

Further, notification of the estimated arrival times of the multiple users who have an appointment with each other may also be issued. Accordingly, the user can grasp in advance how long the other user(s) is(/are) late for the appointment time.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, it is also possible to create a program for causing hardware such as a CPU, a ROM, and a RAM, which are built in the server 1 or the user terminal 2, to exhibit the function of the server 1 or the user terminal 2. Further, there is also provided a computer-readable storage medium having the program stored therein.

Further, in the information processing system according to the present embodiment, messages may be exchanged between multiple users who have an appointment with each other.

Still further, in the embodiment described above, the notification of the current positions of the multiple users who have an appointment with each other is automatically started in accordance with the appointment time, the appointment place, and the current position of the user, at a timing taken into account the travel distance or the travel time to the appointment place (see S118), but the present embodiment is not limited thereto. For example, in the case where a schedule application is booted up in the user terminal 2 and schedule information on an appointment is selected by a user, a map image indicating current positions of multiple users who have an appointment with each other may be displayed, in addition to detailed information (place, time, subject, and the like) on the appointment. Note that, in the case where the schedule information on an appointment is selected by the user, the server 1 may perform control such that a map image indicating current positions of the multiple users is displayed on the user terminal 2 in accordance with user operation, if a predetermined time period has elapsed from the appointment time.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   an acquisition unit configured to acquire schedule information on an appointment between a plurality of users; and
   a controller configured to perform control in a manner that pieces of current position information of the plurality of users are shared a predetermined time period before an appointment time included in the schedule information.
(2) The information processing apparatus according to (1), in which
   the schedule information includes information on an appointment time, an appointment place, and an appointment partner with whom a user is making an appointment.
(3) The information processing apparatus according to (2), in which
   the controller performs control in a manner that, at a timing corresponding to a current position of the user, an appointment place, and an appointment time, the plurality of users making an appointment with each other are notified of pieces of current position information of the respective plurality of users and sharing of position information is started.
(4) The information processing apparatus according to (3), in which
   the controller starts notification of current position information of an appointment partner at a timing before a time period in which a user is capable of arriving at an appointment place at an appointment time taking into account a travel time or a travel distance from a current position to the appointment place of the user.
(5) The information processing apparatus according to any one of (2) to (4), in which
   the controller performs control in a manner that a user is notified of schedule information on the appointment a predetermined time period before the appointment time.
(6) The information processing apparatus according to any one of (2) to (5), in which
   the controller performs control in a manner that an appointment partner is notified that the user has started traveling.
(7) The information processing apparatus according to any one of (2) to (6), in which
   the controller performs control in a manner that a time at which the user arrives at an appointment place is estimated, and an appointment partner is notified of the estimated arrival time.
(8) The information processing apparatus according to any one of (2) to (7), in which
   the controller performs control in a manner that transportation means of the user is determined, and an appointment partner is notified of the determined transportation means.
(9) The information processing apparatus according to any one of (2) to (8), in which
   the controller performs control in a manner that a map image is displayed, the map image showing a current position of the user, an appointment place, and a current position of an appointment partner.
(10) The information processing apparatus according to (7), in which
   the controller performs control in a manner that an estimated arrival time of an appointment partner is displayed.
(11) The information processing apparatus according to any one of (2) to (10), in which
   the controller performs control in a manner that an appointment partner is notified that the user has arrived at an appointment place.
(12) The information processing apparatus according to any one of (2) to (11), in which
   the controller performs control in a manner that an authority to change an appointment place is imparted to a user who has arrived at the appointment place first, and, in a case where the appointment place has been changed, an appointment partner not yet arrived is notified of a new appointment place.
(13) The information processing apparatus according to (12), in which
   the controller sets a current position of the user who has arrived at the appointment place first to a new appointment place.
(14) The information processing apparatus according to (12), in which,
   in a case where the appointment place is different from a destination, the controller sets a new appointment place taking into account the destination.
(15) The information processing apparatus according to (12), in which,
   in a case where the appointment place is different from a destination, the controller sets a new appointment place that is nearer to the destination taking into account the destination and an arrival place that corresponds to transportation means of the other user not yet arrived.
(16) The information processing apparatus according to any one of (2) to (15), in which
   the controller cancels the sharing of the current position information after an elapse of a fixed time period from the appointment time.
(17) The information processing apparatus according to any one of (2) to (16), in which
   the controller cancels the sharing of the current position information in a case where everybody has gathered at the appointment place.
(18) A control method including:
   acquiring schedule information on an appointment between a plurality of users; and
   performing control, by a controller, in a manner that pieces of current position information of the plurality of users are shared a predetermined time period before an appointment time included in the schedule information.
(19) A program for causing a computer to function as
   an acquisition unit configured to acquire schedule information on an appointment between a plurality of users, and
   a controller configured to perform control in a manner that pieces of current position information of the plurality of users are shared a predetermined time period before an appointment time included in the schedule information.

### Reference Signs List

- 1: server
- 10: controller
- 10a: schedule information acquisition unit
- 10b: position sharing determination unit
- 10c: position information acquisition unit
- 10d: notification controller
- 10e: arrival time estimation unit
- 10f: appointment place updating unit
- 10g: sharing cancel unit
- 11: communication unit
- 12: schedule information DB
- 13: map information DB
- 2: user terminal
- 20: controller
- 21: communication unit
- 22: input unit
- 23: display
- 24: position measurement unit
- 25: storage
- 3: network

## Claims

1. An information processing apparatus comprising:
an acquisition unit configured to acquire schedule information on an appointment between a plurality of users; and
a controller configured to perform control in a manner that pieces of current position information of the plurality of users are shared a predetermined time period before an appointment time included in the schedule information.

2. The information processing apparatus according to claim 1, wherein
the schedule information includes information on an appointment time, an appointment place, and an appointment partner with whom a user is making an appointment.

3. The information processing apparatus according to claim 2, wherein
the controller performs control in a manner that, at a timing corresponding to a current position of the user, an appointment place, and an appointment time, the plurality of users making an appointment with each other are notified of pieces of current position information of the respective plurality of users and sharing of position information is started.

4. The information processing apparatus according to claim 3, wherein
the controller starts notification of current position information of an appointment partner at a timing before a time period in which a user is capable of arriving at an appointment place at an appointment time taking into account a travel time or a travel distance from a current position to the appointment place of the user.

5. The information processing apparatus according to claim 2, wherein
the controller performs control in a manner that a user is notified of schedule information on the appointment a predetermined time period before the appointment time.

6. The information processing apparatus according to claim 2, wherein
the controller performs control in a manner that an appointment partner is notified that the user has started traveling.

7. The information processing apparatus according to claim 2, wherein
the controller performs control in a manner that a time at which the user arrives at an appointment place is estimated, and an appointment partner is notified of the estimated arrival time.

8. The information processing apparatus according to claim 2, wherein
the controller performs control in a manner that transportation means of the user is determined, and an appointment partner is notified of the determined transportation means.

9. The information processing apparatus according to claim 2, wherein
the controller performs control in a manner that a map image is displayed, the map image showing a current position of the user, an appointment place, and a current position of an appointment partner.

10. The information processing apparatus according to claim 7, wherein
the controller performs control in a manner that an estimated arrival time of an appointment partner is displayed.

11. The information processing apparatus according to claim 2, wherein
the controller performs control in a manner that an appointment partner is notified that the user has arrived at an appointment place.

12. The information processing apparatus according to claim 2, wherein
the controller performs control in a manner that an authority to change an appointment place is imparted to a user who has arrived at the appointment place first, and, in a case where the appointment place has been changed, an appointment partner not yet arrived is notified of a new appointment place.

13. The information processing apparatus according to claim 12, wherein
the controller sets a current position of the user who has arrived at the appointment place first to a new appointment place.

14. The information processing apparatus according to claim 12, wherein,
in a case where the appointment place is different from a destination, the controller sets a new appointment place taking into account the destination.

15. The information processing apparatus according to claim 12, wherein,
in a case where the appointment place is different from a destination, the controller sets a new appointment place that is nearer to the destination taking into account the destination and an arrival place that corresponds to transportation means of the other user not yet arrived.

16. The information processing apparatus according to claim 2, wherein
the controller cancels the sharing of the current position information after an elapse of a fixed time period from the appointment time.

17. The information processing apparatus according to claim 2, wherein
the controller cancels the sharing of the current position information in a case where everybody has gathered at the appointment place.

18. A control method comprising:
acquiring schedule information on an appointment between a plurality of users; and
performing control, by a controller, in a manner that pieces of current position information of the plurality of users are shared a predetermined time period before an appointment time included in the schedule information.

19. A program for causing a computer to function as
an acquisition unit configured to acquire schedule information on an appointment between a plurality of users, and
a controller configured to perform control in a manner that pieces of current position information of the plurality of users are shared a predetermined time period before an appointment time included in the schedule information.
